Europäisches Patentamt

(19) European Patent Office

Office européen des brevets

(11) Publication number: **0 029 278**
**B1**

(12) EUROPEAN PATENT SPECIFICATION ·

(45) Date of publication of patent specification: **13.08.86**

(21) Application number: **80201102.3**

(22) Date of filing: **19.11.80**

(51) Int. Cl.⁴: **A 01 K 5/02**

(54) Automatic cattle feeding device.

(30) Priority: **19.11.79 NL 7908442**
**23.05.80 NL 8003014**

(43) Date of publication of application:
**27.05.81 Bulletin 81/21**

(45) Publication of the grant of the patent:
**13.08.86 Bulletin 86/33**

(84) Designated Contracting States:
**AT BE CH DE FR GB IT LI LU NL SE**

(56) References cited:
**CH-A- 367 656**
**DE-A-2 739 069**
**GB-A- 977 206**
**US-A-1 364 003**
**US-A-2 940 639**
**US-A-3 117 681**
**US-A-3 150 798**
**US-A-3 173 400**
**US-A-3 256 861**
**US-A-3 962 997**

(73) Proprietor: **N.V. Nederlandsche**
**Apparatenfabriek NEDAP**
**Oude Winterswijkseweg 7**
**NL-7141 DE Groenlo (NL)**

(72) Inventor: **Harmsen, Jan Hendrik**
**Sterreweg 5**
**NL-7255 BJ Hengelo (NL)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to an animal feeding apparatus including a supply container for holding food, a dosing device disposed below said supply container and in communication therewith, a housing located below said dosing device, said dosing device being a worm device and being operable to remove food from said container and deliver same via a dosing device outlet to a second container disposed adjacent said worm device, said second container having an opening situated at the top and said second container being rotatable to move the opening downwardly to thereby discharge food therein through the opening to said housing.

In such an apparatus known from US patent 3,962,997, the food freely falls from the dosing device into the subjacent second container comprising a receptacle tiltable about a stationary shaft, said receptacle being fitted with an adjustable counterweight.

A drawback going with this prior art construction is that in case an animal's head strikes the apparatus, food can still fall from the dosing device, so that it is possible that the second container delivers an additional portion of food. A further drawback is that food leavings may remain in the second container during the tilting movement thereof.

It is an object of the present invention to eliminate these drawbacks.

For this purpose the apparatus according to the invention is characterized in that said second container is connected to said worm device for rotation therewith, is open at its end which faces the worm device and is closed at its other end; in that said housing has an opening therein through which an animal inserts its head to obtain access to food delivered to said housing; and in that said dosing device is controlled by signals generated in response to the presence of said animal at said opening of said housing.

In order to prevent, especially in case of a floury food product, that the rotary container is not completely emptied as it is turned round, owing to the fact that the product sticks to the container well, scraper means may be fixed relative to said second container and engageable with the inner surface of said second container during the course of rotation thereof for wiping said inner surface clean of food.

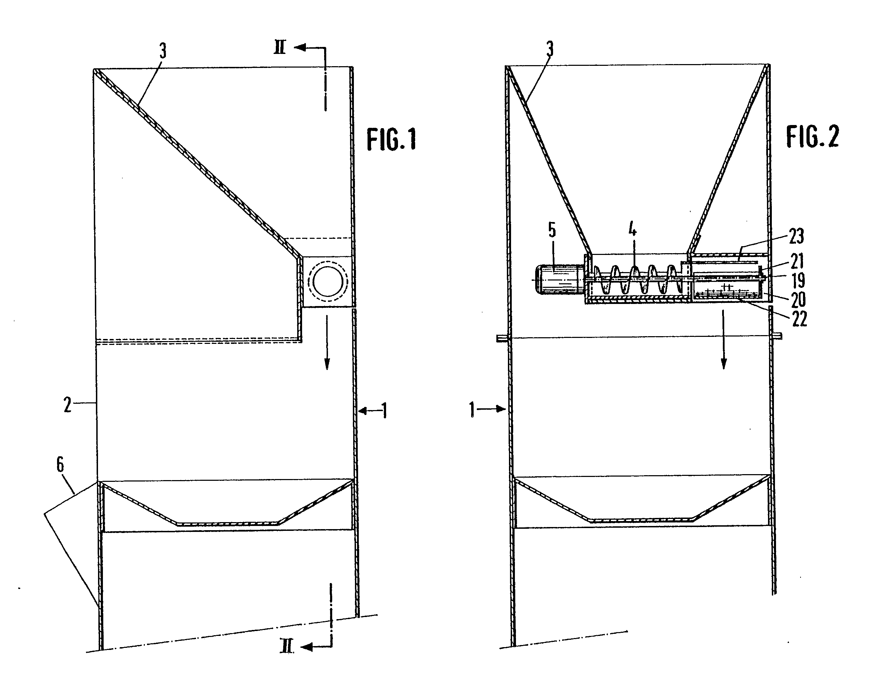

For completeness' sake, it is observed that US patent 3,173,400 describes a feeding apparatus fitted with two worms (Fig. 2; 24) for discharging the proper quantity of food, and (Fig. 2; 15) for uniformly distributing the food over the entire food container. Both worms are necessary: in case for instance the latter food container should be omitted, then an after drop of food is possible.

For clarifying the invention, one embodiment of the automatic feeding device will be described, by way of example, with reference to the drawings.

Fig. 1 is a diagrammatic side-elevational view of a feeding device; and

Fig. 2 is a view taken on the line II—II of Fig. 1.

According to the drawings the feeding device comprises a housing 1 with a head insertion opening 2. Disposed above housing 1 is a funnel-shaped supply container 3 having a dosing worm 4 at the bottom. The dosing worm is driven by an electric motor 5 included in an electric circuit which also includes a magnet switch 6 provided below the head insertion 2, which switch is responsive to a chain or other signalling means hanging around an animal's neck.

In the embodiment shown, funnel 3 is integrated with housing 1. The shaft of worm 4 has an extension 19 carrying a container 20 rotatable along with worm 4. Container 20 has a closed end wall 21 and a substantially cylindrical side wall 22. This means that container 20 is open at the top (as depicted in Fig. 2) and also open at the end facing worm 4.

When worm 4 rotates a given amount of food will be introduced into container 20, and as container 20 rotates along with worm 4, this amount is poured into housing 1 of the feeding device, so that it can be eaten by an animal reaching with its head through the opening 2.

If use is made of a feeding system in which each animal carries a transmitter whose signal is representative of the amount of food to which the particular animal is entitled, upon arrival of the animal at the feeding device the signal transmitted by the transmitter will be translated into a number of revolutions of worm 4 and container 20, so that the animal gets the amount of food to which it is entitled, provided feeding is not blocked because of the animal having already consumed the amount of food to which it is entitled at that moment.

In order to release products sticking to container 20 from the container, a scraper may be provided in the form of a stationary strip 23. During the rotation of the container, the inner surface of side wall 22 of the container moves along the strip and is wiped clean.

## Claims

1. Animal feeding apparatus including a supply container (3) for holding food, a dosing device disposed below said supply container (3) and in communication therewith, a housing (1) located below said dosing device, said dosing device being a worm device (4) and being operable to remove food from said container (3) and deliver same via a dosing device outlet to a second container (20) disposed adjacent said worm device (4), said second container (20) having an opening situated at the top and said second container (20) being rotatable to move the opening downwardly to thereby discharge food therein through the opening to said housing (1), characterized in that said second container (20) is connected to said worm device (4) for rotation therewith, is open at its end which faces the worm device (4) and is closed at its other end (21); in that said housing (1) has an opening (2) therein through which an animal inserts its head to obtain access to food delivered to said housing (1); and in that said dosing device (4) is controlled by signals generated in response to the presence of said animal at said opening (2) of said housing (1).

2. The animal feeding apparatus of claim 1, characterized by scraper means (23) fixed relative to said second container (20) and engageable with the inner surface (22) of said second container during the course of rotation thereof for wiping said inner surface clean of food.

## Patentansprüche

1. Viehfütterungsvorrichtung mit einem Zufuhrbehälter (3) zur Aufnahme von Futter, einer Dosiereinrichtung, die unter dem Zufuhrbehälter (3) angeordnet ist und mit diesem in Verbindung steht, einem unter der Dosiereinrichtung angeordneten Gehäuse (1), wobei die Dosiereinrichtung eine Schneckeneinrichtung (4) enthält, die geeignet ist, Futter aus dem Zufuhrbehälter (3) abzuziehen und über einen Dosierauslaß einem zweiten Behälter (20) zuzuführen, der neben der Schneckeneinrichtung (4) angeordnet ist, und wobei der zweite Behälter (20) eine oben liegende Öffnung enthält und drehbar ist, um die Öffnung nach unten drehen und so darin befindliches Futter durch die Öffnung in das Gehäuse (1) entleeren zu können, dadurch gekennzeichnet, daß der zweite Behälter (20) zwecks Drehung zusammen mit der Schneckeneinrichtung (4) mit dieser verbunden ist, daß er an seinem der Schneckeneinrichtung (4) zugewandten Ende offen und an seinem anderen Ende (21) geschlossen ist, daß das Gehäuse (1) eine Öffnung (2) aufweist, durch welche ein Tier seinen Kopf einführen kann, um Zugang zum Futter zu bekommen, welches dem Gehäuse (1) zugeführt wurde, und daß die Dosiereinrichtung durch Signale steuerbar ist, die in Abhängigkeit von der Anwesenheit des Tierkopfes in der Öffnung (2) des Gehäuses (1) erzeugbar sind.

2. Viehfütterungsvorrichtung nach Anspruch 1, dadurch gekennzeichnet, daß ein Kratzer oder Schaber (23) relativ zum zweiten Behälter (20) derart fest angeordnet ist, daß er mit der inneren Oberfläche (22) des zweiten Behälters (20) während der Drehung desselben zusammenwirken kann, um so deren innere Oberfläche durch Abwischen von Futter reinigen zu können.

## Revendications

1. Appareil pour l'alimentation du bétail, comprenant un récipient d'approvisionnement (3) pour contenir des aliments, un dispositif de dosage disposé sous ledit récipient d'approvisionnement (3) et communiquant avec celui-ci, un logement (1) situé sous le dispositif de dosage, ledit dispositif de dosage étant un dispositif (4) à vis sans fin et pouvant être mis en oeuvre pour retirer des aliments du récipient (3) et acheminer ceux-ci, via une sortie du dispositif de dosage, jusqu'à un deuxième récipient (20) disposé à côté du dispositif (4) à vis sans fin, ledit deuxième récipient (20) possédant une ouverture située en haut et le deuxième récipient (20) pouvant tourner pour déplacer l'ouverture vers le bas pour décharger ainsi par l'ouverture, dans le logement (1), des aliments contenus dans ce récipient, caractérisé en ce que le deuxième récipient (20) est relié au dispositif (4) à vis sans fin pour tourner avec celui-ci, est ouvert à son extrémité tournée vers le dispositif (5) à vis sans fin et est fermé à son autre extrémité (21); en ce que le logement (1) comporte une ouverture (2) par laquelle un animal introduit la tête pour accéder aux aliments fournis dans le logement (1); et en ce que le dispositif de dosage (4) est commandé par des signaux produits en réponse à la présence dudit animal à l'ouverture (2) du logement (1).

2. Appareil pour l'alimentation du bétail selon la revendication 1, caractérisé par un râcleur (23) fixe par rapport au deuxième récipient (20) et pouvant venir au contact de la surface interne (22) du deuxième récipient au cours de la rotation de celui-ci pour retirer par essuyage les aliments présents sur ladite surface interne.

FIG.1

FIG.2

0 029 278